# EUROPÄISCHE PATENTANMELDUNG

(11) **EP 3 598 275 A1**
(43) Veröffentlichungstag der Anmeldung: **22.01.2020**
(21) Anmeldenummer: 19401026.0
(22) Anmeldetag: 09.07.2019
(51) Int. Cl.: G06F 3/023, G06F 3/0488

(54) **BEDIENEINHEIT FÜR EINE LANDWIRTSCHAFTLICHE MASCHINE**

(30) Priorität: 20.07.2018 DE 102018117619
(71) Anmelder: Amazonen-Werke H. Dreyer GmbH & Co. KG, 49205 Hasbergen (DE)
(72) Erfinder: Kötter, Heiner, 49086 Osnabrück (DE)

(57) **Zusammenfassung**

Die Erfindung betrifft eine Bedieneinheit für eine landwirtschaftliche Maschine, mit einer berührungssensitiven Anzeigeeinrichtung, welche dazu eingerichtet ist, einem Benutzer die Eingabe einer Zeichenfolge in ein aktives Eingabefeld zu ermöglichen, und einer Steuerungseinrichtung, welche dazu eingerichtet ist, die Darstellung von einer oder mehreren bereits zuvor eingegebenen Zeichenfolgen durch die berührungssensitive Anzeigeeinrichtung als Eingabevorschläge zu veranlassen.

## Beschreibung

Die Erfindung betrifft eine Bedieneinheit für eine landwirtschaftliche Maschine nach dem Oberbegriff des Patentanspruchs 1, eine landwirtschaftliche Maschine nach dem Oberbegriff des Patentanspruchs 11 und ein Verfahren zum Betreiben einer Bedieneinheit einer landwirtschaftlichen Maschine nach dem Oberbegriff des Patentanspruchs 12.

Eine Vielzahl von Funktionen moderner landwirtschaftlicher Maschinen erfordert eine Texteingabe über eine Bedieneinheit. Derartige Funktionen können beispielsweise die Auftragsverwaltung und/oder deren Dokumentation betreffen. Ein weiteres Beispiel einer Funktion einer modernen landwirtschaftlichen Maschine, welche Texteingaben über eine Bedieneinheit erfordert, ist die Verwaltung von Applikationskarten.

Aus der Druckschrift US 2011/0029862 A1 ist beispielsweise eine kontextbasierte Schnelleingabe für mobile Endgeräte bekannt. Entsprechende Lösungen, welche die Eingabe von wiederkehrenden Zeichenfolgen bei landwirtschaftlichen Maschinen erlauben, sind bisher nicht bekannt. Die manuelle Eingabe von Zeichenfolgen über Bedieneinheiten von landwirtschaftlichen Maschinen ist zeitaufwendig und führt zu einer erheblichen Beeinträchtigung des Nutzungskomforts entsprechender Funktionen der landwirtschaftlichen Maschinen.

Die der Erfindung zugrundeliegende Aufgabe besteht somit darin, die Eingabe von Zeichenfolgen bei der Benutzung von Funktionen einer landwirtschaftlichen Maschine zu beschleunigen und/oder zu vereinfachen.

Die Aufgabe wird gelöst durch eine Bedieneinheit der eingangs genannten Art, wobei die erfindungsgemäße Bedieneinheit eine Steuerungseinrichtung aufweist, welche dazu eingerichtet ist, die Darstellung von einer oder mehreren bereits zuvor eingegebenen Zeichenfolgen durch eine berührungssensitive Anzeigeeinrichtung als Eingabevorschläge zu veranlassen.

Die Erfindung macht sich die Erkenntnis zunutze, dass durch die Darstellung von Eingabevorschlägen bei der Nutzung von Funktionen von landwirtschaftlichen Maschinen die vollständige Eingabe einer Zeichenfolge durch die Auswahl eines Eingabevorschlags ersetzt werden kann. Aufgrund der Verwendung einer berührungssensitiven Anzeigeeinrichtung kann die Auswahl eines Eingabevorschlags durch eine einzige Anzeigenberührung erfolgen. Die Eingabe einer vollständigen Zeichenfolge würde ein Vielfaches an Zeit in Anspruch nehmen, sodass die Eingabe gebräuchlicher Ausdrücke mittels der erfindungsgemäßen Bedieneinheit erheblich beschleunigt wird.

Die Zeichenfolgen können Buchstaben, Ziffern und/oder Sonderzeichen umfassen. Die berührungssensitive Anzeigeeinrichtung kann beispielsweise als Touchscreen ausgebildet sein. Die Bedieneinheit kann beispielsweise Bestandteil eines ISOBUS-Terminals sein.

In einer bevorzugten Ausführungsform der erfindungsgemäßen Bedieneinheit ist die Steuerungseinrichtung dazu eingerichtet, die Übernahme eines von dem Benutzer über die berührungssensitive Anzeigeeinrichtung ausgewählten Eingabevorschlags in ein aktives Eingabefeld zu veranlassen. Die Auswahl eines Eingabevorschlags kann dabei beispielsweise über die Berührung der Anzeigeeinrichtung durch den Benutzer im Bereich des auszuwählenden Eingabevorschlags erfolgen. Alternativ kann die Auswahl eines Eingabevorschlags durch die Betätigung einer Auswahltaste erfolgen. Vorzugsweise ist die Steuerungseinrichtung der Bedieneinheit dazu eingerichtet, nach der Übernahme eines ausgewählten Eingabevorschlags in das aktive Eingabefeld eine weitere Modifikation und/oder Ergänzung der übernommenen Zeichenfolge zu erlauben. Beispielsweise kann die Steuerungseinrichtung der Bedieneinheit dazu eingerichtet sein, nach der Übernahme eines von dem Benutzer ausgewählten Eingabevorschlags in das aktive Eingabefeld weitere Eingabevorschläge anzuzeigen. Dies kann insbesondere dann vorteilhaft sein, wenn das aktive Eingabefeld üblicherweise die Eingabe von mehreren Zeichenfolgen, beispielsweise mehreren Wörtern und/oder Daten, erfordert.

Die erfindungsgemäße Bedieneinheit wird ferner dadurch vorteilhaft weitergebildet, dass die Steuerungseinrichtung dazu eingerichtet ist, die Darstellung einer virtuellen Tastatur auf der berührungssensitiven Anzeigeeinrichtung zu veranlassen, welche es einem Benutzer ermöglicht, eine Zeichenfolge in ein aktives Eingabefeld einzugeben. Die virtuelle Tastatur erlaubt die Eingabe einzelner Zeichen einer Zeichenfolge durch die Berührung der Anzeigeeinrichtung an einer dem jeweiligen Zeichen zugeordneten Stelle. Beispielsweise ist die Steuerungseinrichtung dazu eingerichtet, unterschiedliche Darstellungen einer virtuellen Tastatur zu veranlassen, welche sich beispielsweise in der Größe der virtuellen Tasten und/oder der Größe der Tastenbeschriftung unterscheiden. Beispielsweise ist die Steuerungseinrichtung dazu eingerichtet, die auswählbaren virtuellen Tasten der virtuellen Tastatur zu beschränken, beispielsweise auf Buchstaben oder Zahlen. Hierdurch wird das Risiko einer unbeabsichtigten Fehleingabe durch den Benutzer reduziert. Beispielsweise ist die Auswahl von Buchstaben nicht möglich, wenn in dem aktiven Eingabefeld Zahlen einzugeben sind. Analog kann die Eingabe von Zahlen nicht möglich sein, wenn in dem aktiven Eingabefeld die Eingabe von Buchstaben vorgesehen ist.

Die erfindungsgemäße Bedieneinheit wird ferner dadurch vorteilhaft weitergebildet, dass die Steuerungseinrichtung dazu eingerichtet ist, die Darstellung der Eingabevorschläge in einem Schnellauswahlbereich der berührungssensitiven Anzeigeeinrichtung zu veranlassen. Vorzugsweise ist der Schnellauswahlbereich derart angeordnet, dass die Benutzung der virtuellen Tastatur während der Anzeige von Eingabevorschlägen im Schnellauswahlbereich weiterhin möglich ist. Dies ist insbesondere dann vorteilhaft, wenn der Benutzer die Eingabe einer Zeichenfolge beabsichtigt, welche nicht im Schnellauswahlbereich als Eingabevorschlag angezeigt wird.

Darüber hinaus ist eine erfindungsgemäße Bedieneinheit bevorzugt, bei welcher der Schnellauswahlbereich außerhalb des Bereichs der virtuellen Tastatur angeordnet ist. Der Schnellauswahlbereich kann beispielsweise oberhalb, unterhalb und/oder seitlich von der virtuellen Tastatur angeordnet sein. Vorzugsweise ist der Schnellauswahlbereich ortsfest in Bezug auf den Bereich der virtuellen Tastatur angeordnet. Durch die ortsfeste Anordnung des Schnellauswahlbereichs in Bezug auf den Bereich der virtuellen Tastatur wird eine intuitive Bedienung der Bedieneinheit gefördert, da der Benutzer auswählbare Eingabevorschläge stets an der gleichen Position der Anzeigeeinrichtung erwartet.

In einer weiteren Ausführungsform der erfindungsgemäßen Bedieneinheit ist der Schnellauswahlbereich zumindest teilweise innerhalb des Bereichs der virtuellen Tastatur angeordnet. Die Steuerungseinrichtung kann dazu eingerichtet sein, den Schnellauswahlbereich und/oder die Eingabevorschläge ein- und auszublenden. Beispielsweise wird der Schnellauswahlbereich und/oder die Eingabevorschläge für eine definierte Zeitdauer eingeblendet, bevor eine selbsttätige Ausblendung des Schnellauswahlbereichs und/oder der Eingabevorschläge erfolgt.

In einer Weiterbildung der erfindungsgemäßen Bedieneinheit ist die Steuerungseinrichtung dazu eingerichtet, auf Basis einer statistischen Auswertung zuvor eingegebener Zeichenfolgen eine Rangfolge von Zeichenfolgen zu ermitteln und eine Anzahl der ranghöchsten Zeichenfolgen als Eingabevorschläge anfänglich anzuzeigen. Die Anzahl der anfänglich anzuzeigenden ranghöchsten Zeichenfolgen kann auch eins sein, sodass lediglich eine Zeichenfolge als Eingabevorschlag in einem Schnellauswahlbereich angezeigt wird. Vorzugsweise erfolgt die Auswertung der zuvor eingegebenen Zeichenfolgen zum Ermitteln der Rangfolge nicht-kontextbasiert.

Darüber hinaus ist eine erfindungsgemäße Bedieneinheit vorteilhaft, bei welcher die Steuerungseinrichtung dazu eingerichtet ist, auf Basis einer statistischen Auswertung zuvor eingegebener Zeichenfolgen eine Rangfolge von Zeichenfolgengruppen zu ermitteln, welche mehrere Eingabealternativen umfassen, und mehrere oder sämtliche Zeichenfolgen der ranghöchsten Zeichenfolgengruppe als Eingabevorschläge anfänglich anzuzeigen. Bei der Verwendung einiger Funktionen ist es üblich, dass eine von mehreren Eingabealternativen in ein aktives Eingabefeld einzugeben ist. Beispielsweise existiert für einige Eingabefelder eine begrenzte Anzahl von zulässigen Zeichenfolgen, welche in das Eingabefeld eingebbar sind. In diesem Fall ist es besonders vorteilhaft, wenn unzulässige Eingabevorschläge nicht im Schnellauswahlbereich angezeigt werden. Der Schnellauswahlbereich kann somit für die Anzeige von zulässigen Eingabevorschlägen genutzt werden, welche gegenseitige Eingabealternativen darstellen können.

Darüber hinaus ist eine erfindungsgemäße Bedieneinheit vorteilhaft, bei welcher die Steuerungseinrichtung dazu eingerichtet ist, die Darstellung von einem oder mehreren Eingabevorschlägen zu veranlassen, deren Rang niedriger als der Rang der anfänglich angezeigten Zeichenfolgen ist. Dies kann beispielsweise über ein Bedienfeld umgesetzt werden, dessen Betätigung zur Anzeige weiterer Eingabevorschläge führt. Vorzugsweise werden die weiteren Eingabevorschläge in der Reihenfolge gemäß ihres jeweiligen Ranges bei Betätigen des Bedienfelds angezeigt. Beispielsweise kann das Bedienfeld mit einer Pfeiltaste gekennzeichnet sein, welche den Benutzer darauf hinweist, dass bei Betätigung weitere rangniedrigere Eingabevorschläge durch die Anzeigeeinrichtung angezeigt werden.

Darüber hinaus ist eine erfindungsgemäße Bedieneinheit bevorzugt, bei welcher die Steuerungseinrichtung dazu eingerichtet ist, einem Benutzer die Hinterlegung einer Liste von Zeichenfolgen zu ermöglichen und eine Zeichenfolge, mehrere oder sämtliche Zeichenfolgen der Liste als Eingabevorschläge anfänglich anzuzeigen. Beispielsweise kann die Steuerungseinrichtung dazu eingerichtet sein, einem Benutzer die Hinterlegung von eingabefeldspezifischen Listen von Zeichenfolgen zu ermöglichen. Bei der Aktivierung eines Eingabefeldes über die Anzeigeeinrichtung der Bedieneinheit wird in diesem Fall die dem Eingabefeld zugeordnete hinterlegte Liste von Zeichenfolgen geladen und dem Benutzer eine Zeichenfolge, mehrere oder sämtliche Zeichenfolgen der Liste als Eingabevorschläge für das ausgewählte Eingabefeld angezeigt.

Die der Erfindung zugrundeliegende Aufgabe wird außerdem durch eine landwirtschaftliche Maschine der eingangs genannten Art gelöst, wobei die Bedieneinheit der erfindungsgemäßen landwirtschaftlichen Maschine nach einer der vorstehend beschriebenen Ausführungsformen ausgebildet ist. Hinsichtlich der Vorteile und Modifikationen der erfindungsgemäßen landwirtschaftlichen Maschine wird auf die Vorteile und Modifikationen der erfindungsgemäßen Bedieneinheit verwiesen.

Die landwirtschaftliche Maschine kann beispielsweise ein Traktor sein. Alternativ kann die landwirtschaftliche Maschine eine selbstfahrende Landmaschine sein, beispielsweise eine selbstfahrende Feldspritze. Darüber hinaus ist es möglich, dass die landwirtschaftliche Maschine eine Aufsatzmaschine oder Anhängemaschine ist, welche in Kombination mit einem landwirtschaftlichen Fahrzeug zu bewegen ist.

Die der Erfindung zugrundeliegende Aufgabe wird ferner durch ein Verfahren der eingangs genannten Art gelöst, wobei das erfindungsgemäße Verfahren das Darstellen von einer oder mehreren bereits zuvor eingegebenen Zeichenfolgen durch die berührungssensitive Anzeigeeinrichtung als Eingabevorschläge umfasst. Vorzugsweise ist die berührungssensitive Anzeigeeinrichtung als Touchscreen ausgebildet.

Das erfindungsgemäße Verfahren wird ferner dadurch vorteilhaft weitergebildet, dass ein von einem Benutzer über die berührungssensitive Anzeigeeinrichtung ausgewählter Eingabevorschlag in ein aktives Eingabefeld übernommen wird. Alternativ oder zusätzlich wird eine virtuelle Tastatur auf der berührungssensitiven Anzeigeeinrichtung dargestellt, welche es einem Benutzer ermöglicht, eine Zeichenfolge in ein aktives Eingabefeld einzugeben. Vorzugsweise umfasst das Verfahren das Auswählen eines Eingabefeldes durch einen Benutzer, wobei die Auswahl des Eingabefeldes zu dessen Aktivierung führt und somit die Eingabe einer Zeichenfolge ermöglicht wird.

In einer weiteren Ausführungsform des erfindungsgemäßen Verfahrens werden die Eingabevorschläge in einem Schnellauswahlbereich der berührungssensitiven Anzeigeeinrichtung angezeigt. Der Schnellauswahlbereich kann außerhalb des Bereichs der virtuellen Tastatur angeordnet sein. Der Schnellauswahlbereich kann zumindest teilweise innerhalb des Bereichs der virtuellen Tastatur angeordnet sein.

Darüber hinaus ist ein erfindungsgemäßes Verfahren vorteilhaft, bei welchem eine Rangfolge von Zeichenfolgen auf Basis einer statistischen Auswertung zuvor eingegebener Zeichenfolgen ermittelt wird und/oder eine Anzahl der ranghöchsten Zeichenfolgen als Eingabevorschläge anfänglich angezeigt wird. Alternativ oder zusätzlich wird ein oder werden mehrere Eingabevorschläge dargestellt, deren Rang niedriger als der Rang der anfänglich angezeigten Zeichenfolgen ist. Vorzugsweise erfordert das Darstellen des einen oder der mehreren Eingabevorschläge, deren Rang niedriger als der Rang der anfänglich angezeigten Zeichenfolgen ist, die Berührung eines entsprechenden Bedienfeldes durch den Benutzer, welches die Anzeige von anderen Alternativvorschlägen veranlasst.

Das erfindungsgemäße Verfahren wird ferner dadurch vorteilhaft weitergebildet, dass auf Grundlage einer statistischen Auswertung zuvor eingegebener Zeichenfolgen eine Rangfolge von Zeichenfolgengruppen ermittelt wird, welche mehrere Eingabealternativen umfassen. Insbesondere werden mehrere oder sämtliche Zeichenfolgen der ranghöchsten Zeichenfolgengruppe als Eingabevorschläge anfänglich angezeigt. Alternativ oder zusätzlich umfasst das Verfahren das Bereitstellen einer Eingabemöglichkeit für einen Benutzer, welche es dem Benutzer ermöglicht, eine Liste von Zeichenfolgen zu hinterlegen. Die Hinterlegung einer Liste von Zeichenfolgen kann direkt an der Bedieneinheit erfolgen. Alternativ oder zusätzlich kann die Bedieneinheit auch fernkonfigurierbar sein, sodass eine Liste von Zeichenfolgen auch durch eine Ferneingabe hinterlegbar ist. Beispielsweise ist die Bedieneinheit über ein zentrales Computersystem des Herstellers der Bedieneinheit oder eines Drittanbieters über ein mobiles Endgerät konfigurierbar, wobei das mobile Endgerät ebenfalls mit dem zentralen Computersystem verbunden ist. Das Verfahren kann ferner das anfängliche Anzeigen einer Zeichenfolge, mehrerer oder sämtlicher Zeichenfolgen der hinterlegten Liste als Eingabevorschläge umfassen.

Nachfolgend wird eine bevorzugte Ausführungsform der Erfindung unter Bezugnahme auf die beiliegende Zeichnung näher erläutert und beschrieben. Dabei zeigt:

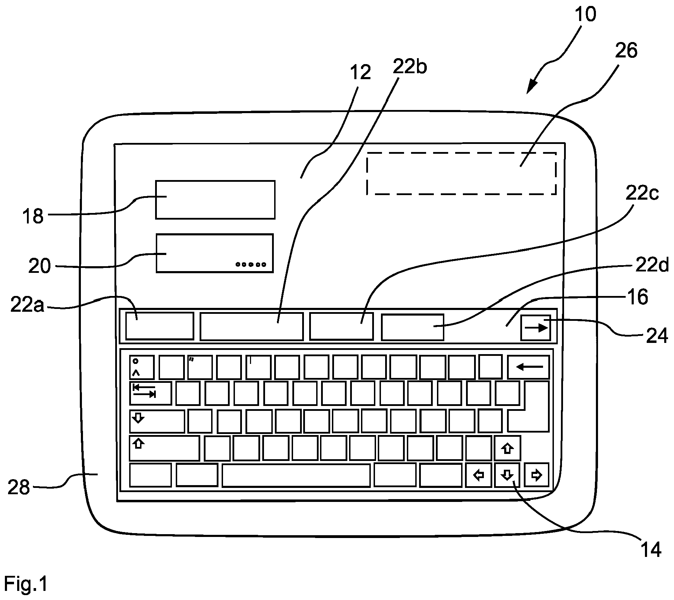

- Fig. 1: ein Ausführungsbeispiel der erfindungsgemäßen Bedieneinheit in einer schematischen Darstellung.

Gemäß der Fig. 1 umfasst die als ISOBUS-Terminal ausgebildete Bedieneinheit 10 für eine landwirtschaftliche Maschine eine berührungssensitive Anzeigeeinrichtung 12 und eine Steuerungseinrichtung 26, wobei die Anzeigeeinrichtung 12 und die Steuerungseinrichtung in einem Gehäuse 28 angeordnet sind.

Die berührungssensitive Anzeigeeinrichtung 12 ist als Touchscreen ausgebildet und dazu eingerichtet, einem Benutzer die Eingabe einer Zeichenfolge in ein aktives Eingabefeld 20 zu ermöglichen. Die ausgewählte Funktion der landwirtschaftlichen Maschine erfordert die Eingabe von Zeichenfolgen, wobei die Zeichenfolgen Buchstaben, Ziffern und Sonderzeichen umfassen können. In dem dargestellten Programmzustand sind zwei Eingabefelder 18, 20 dargestellt. Das Eingabefeld 18 ist inaktiv, da ein Benutzer bereits eine Eingabe für das Eingabefeld 18 umgesetzt hat und nachfolgend durch Berührung der Anzeigeeinrichtung 12 an einer außerhalb des Eingabefeldes 18 liegenden Position, die Aktivierung des Einagefeldes 18 beendet hat. Durch eine Berührung der Anzeigeeinrichtung 12 im Bereich des Eingabefeldes 20 wurde dieses aktiviert, sodass der Benutzer eine Zeichenfolge in das Eingabefeld 20 einbringen kann.

Zur Vermeidung der Notwendigkeit der manuellen Eingabe einer vollständigen Zeichenfolge über die virtuelle Tastatur 14 ist Steuerungseinrichtung 26 dazu eingerichtet, die Darstellung von mehreren bereits zuvor eingegebenen Zeichenfolgen durch die Anzeigeeinrichtung 12 als Eingabevorschläge 22a-22d zu veranlassen. Dies führt zu einer erheblichen Beschleunigung der Eingabe von Zeichenfolgen bei der Bedienung der Bedieneinheit 10 und somit zu einer Steigerung des Nutzungskomforts der Funktionen der landwirtschaftlichen Maschine.

Die Darstellung der Eingabevorschläge 22a-22d erfolgt in einem Schnellauswahlbereich 16 der berührungssensitiven Anzeigeeinrichtung 12. Der Schnellauswahlbereich 16 ist außerhalb, nämlich oberhalb, des Bereichs der virtuellen Tastatur 14 angeordnet. Außerdem ist der Schnellauswahlbereich 16 ortsfest in Bezug auf den Bereich der virtuellen Tastatur 14 angeordnet.

Alternativ kann die Steuerungseinrichtung 26 auch dazu eingerichtet sein, den Schnellauswahlbereich 16 innerhalb des Bereichs der virtuellen Tastatur 14 anzuzeigen. In diesem Fall ist es zur Gewährleistung der Nutzbarkeit der virtuellen Tastatur 14 jedoch vorteilhaft, wenn die Steuerungseinrichtung 26 außerdem dazu eingerichtet ist, den Schnellauswahlbereich 16 und/oder die Eingabevorschläge 22a-22d automatisch ein- und auszublenden. Beispielsweise können der Schnellauswahlbereich 16 und/oder die Eingabevorschläge 22a-22d automatisch wieder ausgeblendet werden, wenn innerhalb einer definierten Auswahlzeit keine Auswahl eines Eingabevorschlags 22a-22d durch den Benutzer erfolgt ist.

Die Steuerungseinrichtung 26 ist auch dazu eingerichtet, die Darstellung von einem oder mehreren Eingabevorschlägen zu veranlassen, welche nicht zu den anfänglich angezeigten Zeichenfolgen gehört. Die Darstellung dieser Eingabevorschläge kann durch den Benutzer durch Betätigung des Bedienfelds 24 umgesetzt werden.

Zur Auswahl der anzuzeigenden Eingabevorschläge 22a-22d ist die Steuerungseinrichtung 26 dazu eingerichtet, auf Basis einer statistischen Auswertung zuvor eingegebener Zeichenfolgen eine Rangfolge von Zeichenfolgen zu ermitteln. Die Auswertung der zuvor eingegebenen Zeichenfolgen zum Ermitteln der Rangfolge erfolgt dabei nicht-kontextbasiert.

In dem dargestellten Ausführungsbeispiel werden die vier ranghöchsten Zeichenfolgen als Eingabevorschläge 22a-22d anfänglich angezeigt. Weitere rangniedrigere Eingabevorschläge werden nach Betätigung des Bedienfelds 24 in der Reihenfolge gemäß ihres jeweiligen Ranges angezeigt.

Alternativ erlaubt es die Steuerungseinrichtung 26 einem Benutzer eine Liste von Zeichenfolgen zu hinterlegen und die Zeichenfolgen der hinterlegten Liste als Eingabevorschläge 22a-22d anfänglich anzuzeigen.

Der Benutzer kann durch Berühren eines Eingabevorschlages 22a-22d über die Anzeigeeinrichtung 12 die Zeichenfolge auswählen, welche in das aktive Eingabefeld 20 übernommen werden soll. Die Steuerungseinrichtung 26 ist dazu eingerichtet, die Übernahme eines von dem Benutzer ausgewählten Eingabevorschlags 22a-22d in das aktive Eingabefeld 20 zu veranlassen.

### Bezugszeichen

- 10: Bedieneinheit
- 12: Anzeigeeinrichtung
- 14: virtuelle Tastatur
- 16: Schnellauswahlbereich
- 18: inaktives Eingabefeld
- 20: aktives Eingabefeld
- 22a-22d: Eingabevorschläge
- 24: Bedienfeld
- 26: Steuerungseinrichtung
- 28: Gehäuse

## Patentansprüche

1. Bedieneinheit (10) für eine landwirtschaftliche Maschine, mit
- einer berührungssensitiven Anzeigeeinrichtung (12), welche dazu eingerichtet ist, einem Benutzer die Eingabe einer Zeichenfolge in ein aktives Eingabefeld (20) zu ermöglichen,
**gekennzeichnet durch** eine Steuerungseinrichtung (26), welche dazu eingerichtet ist, die Darstellung von einer oder mehreren bereits zuvor eingegebenen Zeichenfolgen durch die berührungssensitive Anzeigeeinrichtung (12) als Eingabevorschläge (22a-22d) zu veranlassen.

2. Bedieneinheit (10) nach Anspruch 1,
**dadurch gekennzeichnet, dass** die Steuerungseinrichtung (26) dazu eingerichtet ist, die Übernahme eines von dem Benutzer über die berührungssensitive Anzeigeeinrichtung (12) ausgewählten Eingabevorschlags (22a-22d) in ein aktives Eingabefeld (20) zu veranlassen.

3. Bedieneinheit (10) nach Anspruch 1 oder 2,
**dadurch gekennzeichnet, dass** die Steuerungseinrichtung (26) dazu eingerichtet ist, die Darstellung einer virtuellen Tastatur (14) auf der berührungssensitiven Anzeigeeinrichtung (12) zu veranlassen, welche es einem Benutzer ermöglicht, eine Zeichenfolge in ein aktives Eingabefeld (20) einzugeben.

4. Bedieneinheit (10) nach einem der vorstehenden Ansprüche,
**dadurch gekennzeichnet, dass** die Steuerungseinrichtung (26) dazu eingerichtet ist, die Darstellung der Eingabevorschläge (22a-22d) in einem Schnellauswahlbereich (16) der berührungssensitiven Anzeigeeinrichtung (12) zu veranlassen.

5. Bedieneinheit (10) nach Anspruch 4,
**dadurch gekennzeichnet, dass** der Schnellauswahlbereich (16) außerhalb des Bereichs der virtuellen Tastatur (14) angeordnet ist.

6. Bedieneinheit (10) nach Anspruch 4,
**dadurch gekennzeichnet, dass** der Schnellauswahlbereich (16) zumindest teilweise innerhalb des Bereichs der virtuellen Tastatur (14) angeordnet ist.

7. Bedieneinheit (10) nach einem der vorstehenden Ansprüche,
**dadurch gekennzeichnet, dass** die Steuerungseinrichtung (26) dazu eingerichtet ist, auf Basis einer statistischen Auswertung zuvor eingegebener Zeichenfolgen eine Rangfolge von Zeichenfolgen zu ermitteln und eine Anzahl der ranghöchsten Zeichenfolgen als Eingabevorschläge (22a-22d) anfänglich anzuzeigen.

8. Bedieneinheit (10) nach einem der vorstehenden Ansprüche,
**dadurch gekennzeichnet, dass** die Steuerungseinrichtung (26) dazu eingerichtet ist, auf Basis einer statistischen Auswertung zuvor eingegebener Zeichenfolgen eine Rangfolge von Zeichenfolgengruppen zu ermitteln, welche mehrere Eingabealternativen umfassen, und mehrere oder sämtliche Zeichenfolgen der ranghöchsten Zeichenfolgengruppe als Eingabevorschläge (22a-22d) anfänglich anzuzeigen.

9. Bedieneinheit (10) nach Anspruch 7 oder 8,
**dadurch gekennzeichnet, dass** die Steuerungseinrichtung (26) dazu eingerichtet ist, die Darstellung von einem oder mehreren Eingabevorschlägen (22a-22d) zu veranlassen, deren Rang niedriger als der Rang der anfänglich angezeigten Zeichenfolgen ist.

10. Bedieneinheit (10) nach einem der vorstehenden Ansprüche,
**dadurch gekennzeichnet, dass** die Steuerungseinrichtung (26) dazu eingerichtet ist, einem Benutzer die Hinterlegung einer Liste von Zeichenfolgen zu ermöglichen und eine Zeichenfolge, mehrere oder sämtliche Zeichenfolgen der Liste als Eingabevorschläge (22a-22d) anfänglich anzuzeigen.

11. Landwirtschaftliche Maschine, mit
- einer Bedieneinheit (10), mittels welcher der Betrieb der landwirtschaftlichen Maschine überwachbar und/oder steuerbar ist,
**dadurch gekennzeichnet, dass** die Bedieneinheit (10) nach einem der vorstehenden Ansprüche ausgebildet ist.

12. Verfahren zum Betreiben einer Bedieneinheit (10) einer landwirtschaftlichen Maschine, wobei die Bedieneinheit (10) eine berührungssensitive Anzeigeeinrichtung (12) aufweist, welche dazu eingerichtet ist, einem Benutzer die Eingabe einer Zeichenfolge in ein aktives Eingabefeld (20) zu ermöglichen,
**gekennzeichnet durch** den Schritt:
- Darstellen von einer oder mehreren bereits zuvor eingegebenen Zeichenfolgen durch die berührungssensitive Anzeigeeinrichtung (12) als Eingabevorschläge (22a-22d).

13. Verfahren nach Anspruch 12,
**gekennzeichnet durch** zumindest einen der folgenden Schritte:
- Übernehmen eines von einem Benutzer über die berührungssensitive Anzeigeeinrichtung (12) ausgewählten Eingabevorschlags (22a-22d) in ein aktives Eingabefeld (20);
- Darstellen einer virtuellen Tastatur (14) auf der berührungssensitiven Anzeigeeinrichtung (12), welche es einem Benutzer ermöglicht, eine Zeichenfolge in ein aktives Eingabefeld (20) einzugeben.

14. Verfahren nach Anspruch 12 oder 13,
**dadurch gekennzeichnet, dass** die Eingabevorschläge (22a-22d) in einem Schnellauswahlbereich (16) der berührungssensitiven Anzeigeeinrichtung (12) angezeigt werden.

15. Verfahren nach einem der Ansprüche 12 bis 14,
**gekennzeichnet durch** zumindest einen der folgenden Schritte:
- Ermitteln einer Rangfolge von Zeichenfolgen auf Basis einer statistischen Auswertung zuvor eingegebener Zeichenfolgen;
- anfängliches Anzeigen einer Anzahl der ranghöchsten Zeichenfolgen als Eingabevorschläge (22a-22d);
- Darstellen von einem oder mehreren Eingabevorschlägen (22a-22d), deren Rang niedriger als der Rang der anfänglich angezeigten Zeichenfolgen ist.

16. Verfahren nach einem der Ansprüche 12 bis 15,
**gekennzeichnet durch** zumindest einen der folgenden Schritte:
- Ermitteln einer Rangfolge von Zeichenfolgengruppen, welche mehrere Eingabealternativen umfassen, auf Basis einer statistischen Auswertung zuvor eingegebener Zeichenfolgen;
- anfängliches Anzeigen von mehreren oder sämtlichen Zeichenfolg en der ranghöchsten Zeichenfolgengruppe als Eingabevorschläge (22a-22d);
- Bereitstellen einer Eingabemöglichkeit für einen Benutzer, welche es dem Benutzer ermöglicht, eine Liste von Zeichenfolgen zu hinterlegen;
- anfängliches Anzeigen einer Zeichenfolge, mehrerer oder sämtlicher Zeichenfolgen der Liste als Eingabevorschläge (22a-22d).
